# EUROPEAN PATENT SPECIFICATION

(11) **EP 3 657 131 B1**
(45) Date of publication and mention of the grant of the patent: **06.10.2021**
(21) Application number: 19211057.5
(22) Date of filing: 22.11.2019
(51) Int. Cl.: G01C 23/00, G06F 3/0482, G06F 3/0485

(54) **WAYPOINT LIST PRESENTATION METHODS AND SYSTEMS**
VERFAHREN UND SYSTEME ZUR DARSTELLUNG VON WEGPUNKTLISTEN
SYSTÈME ET PROCÉDÉ DE PRÉSENTATION DE LISTE DE POINT DE CHEMINEMENT

(30) Priority: 26.11.2018 US 201862771353 P; 01.04.2019 US 201916371313
(43) Date of publication of application: 27.05.2020
(73) Proprietor: Honeywell International Inc., Morris Plains, NJ 07950 (US)
(72) Inventor: HEINE, Christopher G., Morris Plains, NJ 07950 (US); MCGLOUGHLIN, David, Morris Plains, NJ 07950 (US); WYATT, Ivan Sandy, Morris Plains, NJ 07950 (US)
(74) Representative: Houghton, Mark Phillip

(56) References cited:
- US-A1- 2007 094 690
- US-A1- 2010 250 117
- US-A1- 2011 118 908
- US-A1- 2013 038 637

## Description

### TECHNICAL FIELD

The subject matter described herein relates generally to vehicle systems, and more particularly, embodiments of the subject matter relate to aircraft systems and related cockpit displays for presenting a list of waypoints associated with a flight plan.

### BACKGROUND

Modern electronic displays for vehicles (such as aircraft, automobiles, marine vessels, or trains) display a considerable amount of information, such as vehicle position, navigation and terrain information. In the case of an aircraft, many modern flight deck displays (or cockpit displays) are utilized to provide a number of different displays from which the user can obtain information or perform functions related to, for example, navigation, flight planning, guidance and navigation, and performance management. In some instances, a cockpit display may have a limited viewable area for a user to review a desired portion of a flight plan or other type of information. This can be an issue because flight plans can have hundreds of waypoints, and thus, navigating within the display to arrive at the desired portion of the flight plan presented on the display can be time consuming and inefficient. Accordingly, it is desirable to improve the navigability of a displayed route of travel. Furthermore, other desirable features and characteristics will become apparent from the subsequent detailed description and the appended claims, taken in conjunction with the accompanying drawings and this background.

US20100250117A1 discloses a device for displaying flight plans of an aircraft comprising a control unit with at least one first display area comprising a textual list of identifiers of points, of pseudo-points and/or of segments that is representative of a portion of the flight plan, the display of the said list being centred around a central display point, the said point corresponding to a point, a pseudo-point or a segment of the flight plan, the said device being characterized in that it comprises means for displacing by jumps the flight plan portion displayed in the first display area by selecting a different central display point from the current central display point, the said selected point becoming the new central display point.

US20070094690A1 discloses a system for providing media information to a user via an interactive media services client device coupled to a programmable media services server device.

US20130038637A1 discloses that an acquisition unit acquires list data concerning contents and records the acquired list data in a recording medium. A list display unit arranges a plurality of content images adjacent to each other and places them on a screen. As a receiving unit acquires an instruction to select one of the content images in a content list, the list display causes a display of the content list including a selected content image, in a first area of the screen and, at the same time, causes a display of detailed information associated with the selected content image, in a second area of the screen.

### BRIEF SUMMARY

The present invention in its various aspects is as set out in the appended claims. Methods and systems are provided for presenting a waypoint list graphical user interface display. According to a first aspect of the invention, a method according to claim 1 is provided. According to another aspect of the invention, an aircraft system according to claim 15 is provided.

### BRIEF DESCRIPTION OF THE DRAWINGS

Embodiments of the subject matter will hereinafter be described in conjunction with the following drawing figures, wherein like numerals denote like elements, and:
FIG. 1 is a block diagram of a system for an aircraft in an exemplary embodiment;
FIGS. 2-9 depict a sequence of waypoint list graphical user interface (GUI) displays suitable for presentation by the aircraft system of FIG. 1 in accordance with one or more embodiments;
FIG. 10 is a block diagram of an aircraft system suitable for presenting the waypoint list GUI displays of FIGS. 2-9 on a display device onboard an aircraft in one or more exemplary embodiments;
FIG. 11 depicts an exemplary embodiment of an electronic flight bag (EFB) system suitable for presenting the waypoint list GUI displays of FIGS. 2-9 in conjunction with the aircraft system of FIG. 1 or FIG. 10 in accordance with one or more embodiments; and
FIG. 12 depicts an exemplary embodiment of a route scrolling process suitable for implementation by a vehicle system in accordance with one or more exemplary embodiments.

### DETAILED DESCRIPTION

Embodiments of the subject matter described herein generally relate to systems and methods for presenting a list of waypoints or other navigational reference points that define a track (or path) for a route of travel, in particular waypoints of a flight plan.

As used herein, a flight plan should be understood as a sequence of navigational reference points or waypoints that define a flight path or route for an aircraft. Depending on the particular flight plan and type of air navigation, the waypoints may comprise navigational aids, such as VHF omni-directional ranges (VORs), distance measuring equipment (DMEs), tactical air navigation aids (TACANs), and combinations thereof (e.g., VORTACs), landing and/or departure locations (e.g., airports, airstrips, runways, landing strips, heliports, helipads, and the like), points of interest or other features on the ground, as well as position fixes (e.g., initial approach fixes (IAFs) and/or final approach fixes (FAFs)) and other navigational reference points used in area navigation (RNAV). For example, a flight plan may include an initial or beginning reference point (e.g., a departure or takeoff location), a final navigational reference point (e.g., an arrival or landing location), and one or more intermediate navigational reference points (e.g., waypoints, positional fixes, and the like) that define the desired path or route for the aircraft from the initial navigational reference point to the final navigational reference point. That said, it should be noted that the term waypoint should be considered interchangeable with other terms such as "landmarks," "navigational aids," or the like, as specific terminology may vary between the aviation, maritime and automotive applications.

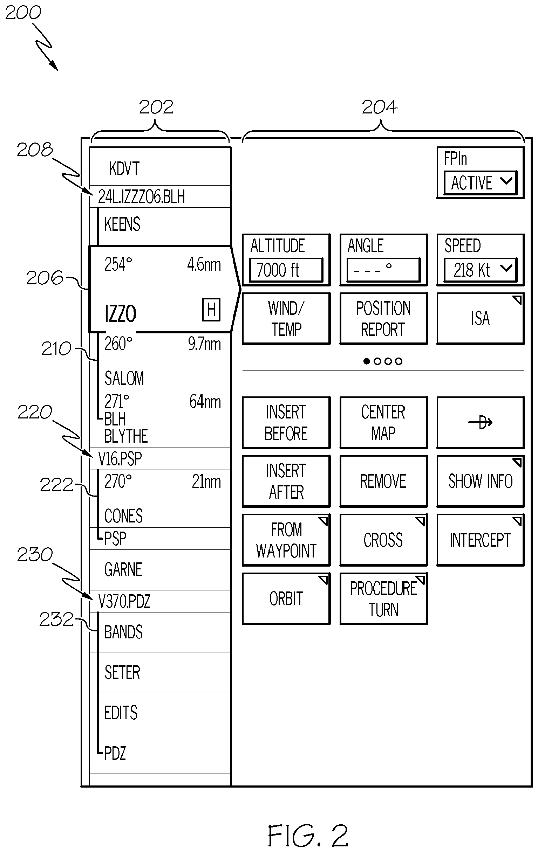

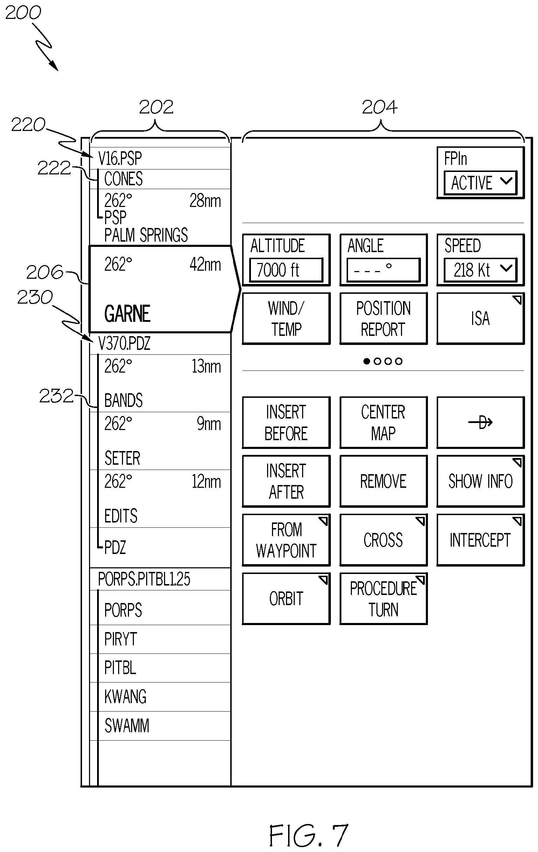

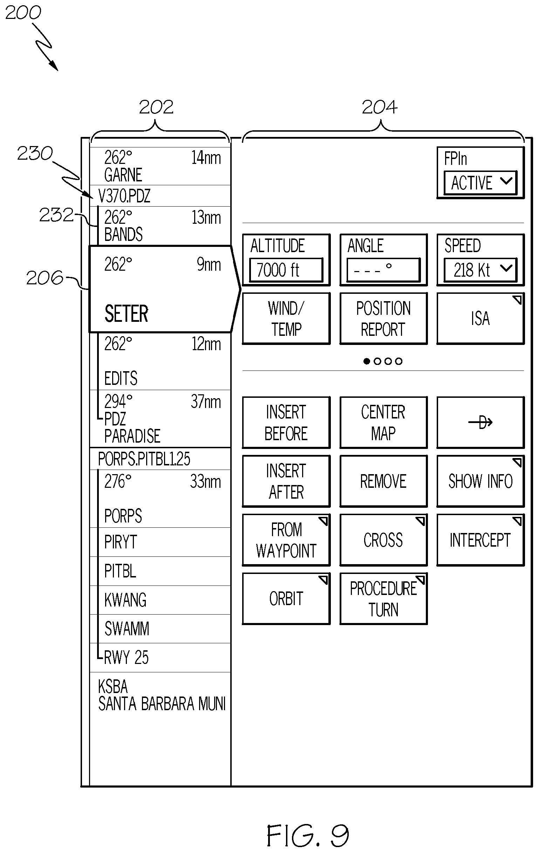

As described in greater detail below in the context of FIGS. 2-9, different sets of the intermediate navigational reference points may define different airways, procedures, or other logical segments of flight between the departure location and the destination location. In exemplary embodiments, the logical groupings of waypoints that define one or more procedural legs or other logically or functionally distinct route segments are marked, denoted, or otherwise indicated on a displayed waypoint list to facilitate a pilot, copilot, or other crew member maintaining a mental association between an individual waypoint and its associated logical segment of the flight plan while scrolling or otherwise navigating through a list of waypoints. In this regard, in exemplary embodiments, a header (or logical divider) including information that identifies or otherwise describes a respective flight plan segment is presented within the sequential ordering of waypoints in the waypoint list before the waypoints associated with that respective flight plan segment, and another graphical indicator is provided that emanates or extends from the header to encompass those waypoints associated with that respective flight plan segment within the waypoint list. In exemplary embodiments, the header for the flight plan segment group to which a currently selected waypoint belongs is presented at a substantially fixed location at or near the top of the waypoint list, with the currently selected waypoint being presented at a substantially fixed location adjacent to and beneath the header. In this regard, as the currently selected waypoint is scrolled or otherwise adjusted within a given flight plan segment group, the flight plan segment group header remains in a fixed position while the waypoint list scrolls by updating the current waypoint selection and adjusting the position or placement of other waypoints.

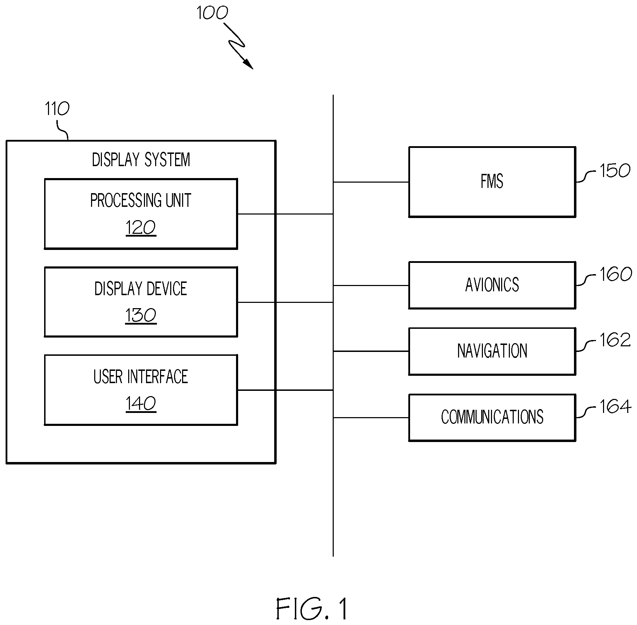

FIG. 1 is a schematic representation of an aircraft system 100 with a visual display system 110 coupled to a flight management system (FMS) 150 and one or more data sources 160, 162, 164. The components and subcomponents of system 100 may be coupled together in any suitable manner, such with as a data bus. Although the system 100 appears in FIG. 1 to be arranged as an integrated system, the system 100 is not so limited and can also include an arrangement whereby one or more aspects of the system 100 are separate components or subcomponents of another system located either onboard or external to the aircraft.

The visual display system 110 includes a processing unit 120, a display device 130, and a user interface 140. Generally, the visual display system 110 displays information from the FMS 150 via the display device 130 and enables interaction between a user (e.g., a pilot or other type of operator) and the FMS 150, as described in greater detail below. Additional information about the operation will be provided below after a brief introduction of each component.

In one or more embodiments, the processing unit 120 is a computer processor associated with flight planning and management functions, particularly the display and navigation of a list of waypoints, such as in a flight plan. In one exemplary embodiment, the processing unit 120 functions to at least receive and/or retrieve aircraft flight management information (e.g., from the FMS 150 and data sources 160, 162, 164). The processing unit 120 may also generate display commands for displaying the flight management information. In this regard, the processing unit 120 may function as a graphics display generator to generate display commands based on algorithms or other machine instructions stored in the processing unit 120 or in separate memory components. The processing unit 120 may then send the generated display commands to display device 130 for presentation to the user. The processing unit 120 may additionally receive and generate display commands based on inputs via the user interface 140.

Depending on the embodiment, the processing unit 120 may be implemented or realized with a general-purpose processor, a content addressable memory, a digital signal processor, an application specific integrated circuit, a field programmable gate array, suitable programmable logic device, discrete gate or transistor logic, processing core, discrete hardware components, or any combination thereof. In practice, the processing unit 120 includes processing logic that may be configured to carry out the functions, techniques, and processing tasks or methods associated with operation of the system 100. The processing unit 120 may further include any suitable type of memory or data storage, such as for example, RAM, ROM, EEPROM, flash memory, optical or magnetic storage devices, or any other medium that can be used to store and access desired information.

The display device 130 is coupled to the processing unit 120 for rendering information to the user based on display commands. In one exemplary embodiment, the display device 130 may be a multifunction monitor, unit, or any display suitable for displaying various symbols and information, such as a multifunction control display unit (MCDU), cockpit display device (CDU), primary flight display (PFD), and/or navigation display. Any suitable type of display medium capable of visually presenting multi-colored or monochrome flight information for a pilot or other flight crew member can be provided, such as, for example, various types of CRT displays, LCDs, OLED displays, plasma displays, projection displays, HDDs, HUDs, and the like.

In exemplary embodiments, the user interface 140 is coupled to the processing unit 120 to allow a user to interact with the display device 130 and/or other elements of the system 100. The user interface may be realized as a keypad, touchpad, keyboard, mouse, touch panel, joystick, knob, line select key or another suitable device adapted to receive input from a user. In further embodiments, the user interface 140 is realized as audio input and output devices, such as a speaker, microphone, audio transducer, audio sensor, or the like. In some embodiments, the user interface may be incorporated into the display device 130. For example, in one embodiment, the display device 130 and user interface 140 are integrated as an interactive MCDU with a display screen and a keyboard, touch-screen and/or other mechanisms for function, display, and/or cursor control.

The FMS 150 is coupled to the display system 110 and one or more data sources 160, 162, 164 and generally functions to support navigation, flight planning, and other aircraft control functions, as well as provides real-time data and/or information regarding the operational status of the aircraft. The FMS 150 may include or otherwise access one or more of the following: a weather system, an air traffic management system, a radar system, a traffic avoidance system, an autopilot system, a flight control system, crew alerting systems, electronic checklist systems, an electronic flight bag, and/or other suitable avionics systems. In particular, the FMS 150 may store and/or generate a flight plan for traveling between a current or initial destination and a final destination.

The data sources 160, 162, 164 can include any suitable type of data source that may be used to construct or modify the flight plan, such as an avionics database 160, a navigation system 162, and a communications system 164, as examples. The avionics database 160 may store aeronautical information data, including, for example, flight plan data, data related to airways, navigational aids, navigational data, obstructions, taxi registration, Special Use Airspace, political boundaries, COM frequencies, approach information, geographical information and the like. The navigation system 162 is configured to provide real-time navigational data and/or information regarding operation of the aircraft. The communications system 164 is suitably configured to support communications between the aircraft and another aircraft or ground location (e.g., air traffic control) via a radio system or another suitable data link system.

As introduced above, the display system 110 particularly functions to display a flight plan, including as examples, a selected or otherwise designated flight plan for subsequent execution, a flight plan selected for review, and/or a flight plan currently being executed by the aircraft. In some embodiments, the FMS 150 may store predefined flight plans, while in further embodiments, the flight plan may be uplinked via the communications system 164 and/or manually entered or created by the user via the user interface 140.

As described above, in exemplary embodiments, the flight plan includes a sequence of navigational reference points or waypoints that define a flight path or route for the aircraft. As described in greater detail below, the flight plan may be displayed as a textual list of waypoints in their order of proximity to the aircraft along a planned track. During flight, as the aircraft passes each successive waypoint, remaining successive waypoints may advance or otherwise move up the list, while a traversed waypoint may be removed from the list (e.g., by advancing to an effective position outside the display area). In practice, waypoints may have various types of characteristics, attributes, or properties associated therewith. These characteristics may be a function of the waypoint itself or a function of the placement of the waypoint within the flight plan. For example, a waypoint may be associated with a particular type of aircraft procedure (e.g., a turn or holding procedure) or be associated with a designated constraint, such as noise, altitude, and/or speed constraints. As further examples, a waypoint may be associated with a specific segment of the flight plan (e.g., departure, en route, approach, missed approach, and/or alternate flight plan). As described in greater detail below, one or more of the characteristics, attributes and/or properties associated with a given waypoint may be presented in association with that waypoint when that waypoint is current selected within the waypoint list, or based on the relationship between that waypoint and a currently selected waypoint.

Generally, the FMS 150 may associate different characteristics to waypoints of a flight plan based on various factors. For example, the FMS 150 may determine some waypoint characteristics based on information from the navigation system 162 and/or avionics database 160 (e.g., identifying a waypoint as a runway or compulsory reporting point; identifying stored defined patterns associated with the waypoint, such as procedure turns, published holding patterns, etc.) or based on flight plan modifications (e.g., the crew and/or operator may insert a holding pattern at a specific waypoint as instructed by ground station). In practice, the FMS 150 may evaluate and divide the entire flight plan to map the waypoints to specific flight phases (or segments), e.g., departure, en-route, arrival procedures, etc. For example, the FMS 150 can assign waypoints from origin to top of climb as departure waypoints; from top of climb to top of descent including any step climbs as en-route waypoints; and from top of descent to destination as arrival waypoints. In this manner, the FMS 150 may identify different logical groupings of waypoints according to logically distinct operational segments of the flight plan.

FIGS. 2-9 depict an exemplary sequence of waypoint list graphical user interface (GUI) displays suitable for presentation on a display device 130 of a display system 110 by or under control of the processing unit 120 and/or the FMS 150. In this regard, FIGS. 2-9 depict a sequence where the waypoint list is scrolled or otherwise advanced forward through the flight plan in response to a user manually scrolling the list (e.g., via the user interface 140) towards the destination. That said, the waypoint list may be similarly scrolled automatically in response to the aircraft traversing waypoints of the flight plan. Additionally, it should be noted that the sequence of FIGS. 2-9 may be similarly performed in reverse in response to a user manually scrolling the waypoint list backwards in time (e.g., scrolling towards the departure).

Referring first to FIG. 2, the waypoint list GUI display 200 includes a waypoint list region 202 that includes a sequential listing of waypoints of the flight plan and a waypoint detail region 204 adjacent to the waypoint list region 202. The waypoint detail region 204 includes graphical representations of one or more characteristics, attributes, or other properties associated with a currently selected waypoint 206 within the waypoint list region 202, such as, for example, a planned aircraft altitude at the waypoint, a planned aircraft speed at the waypoint, meteorological information at the waypoint, and the like.

In exemplary embodiments, the waypoint list region 202 is presented at or along a left edge of the waypoint list GUI display 200 and sequentially ordered in a top-down manner, such that the first waypoint at the top of the waypoint listing corresponds to the departure or other initial waypoint of the flight plan, while the waypoint at the bottom of the waypoint listing corresponds to the destination or final waypoint of the flight plan. In the illustrated embodiment, the currently selected waypoint 206 is presented as the fourth entry in the waypoint list region 202, with preceding waypoints of the flight plan being presented above the currently selected waypoint 206 and successive or future waypoints of the flight plan being presented below the currently selected waypoint 206. The entry for the currently selected waypoint 206 in the waypoint list region 202 includes a graphical representation of one or more characteristics or attributes associated with the currently selected waypoint, such as, for example, a planned heading upon traversing the waypoint and a distance to go from the current aircraft position to the waypoint position. For example, in FIG. 2, the currently selected waypoint 206 corresponds to the IZZO waypoint, where the planned aircraft heading upon traversing the IZZO waypoint according to the flight plan is 264° and the distance-to-go for reaching the IZZO waypoint is 4.6 nautical miles, with the planned altitude at the IZZO waypoint of 7000 feet and the planned airspeed at the IZZO waypoint of 218 knots being depicted within the waypoint detail region 204. In exemplary embodiments, the detail list region 204 is scrollable horizontally to present additional information associated with the currently selected waypoint on the display, while the waypoint list region 202 is scrollable vertically to change the waypoint currently selected for presentation within the detail list region 204.

In exemplary embodiments, in addition to increasing the amount of information presented within the currently selected waypoint entry 206, the currently selected waypoint entry 206 may be rendered using one or more visually distinguishable characteristics that are different from other entries in the waypoint list region 202 to visually emphasize the currently selected waypoint entry 206, such as, for example, a different fill color or pattern, a different font size or weight, and the like. In this regard, waypoints further from the currently selected waypoint entry may be progressively de-emphasized using different visually distinguishable characteristics (e.g., fading) for different entries as one moves down the waypoint list region 202, while also reducing the amount of information depicted within waypoint entries. For example, in the illustrated embodiment, heading and distance-to-go information is presented in the three waypoint entries following the currently selected waypoint entry but obscured or otherwise withheld from presentation in the remaining waypoint entries. In one or more embodiments, the depicted distance-to-go is measured along the track or path defined by the flight plan as opposed to a straight-line distance from the current aircraft position. In exemplary embodiments, the heading and distance-to-go information is presented in the waypoint entry preceding the currently selected waypoint entry 206 is that preceding waypoint has not yet been traversed by the aircraft. In this regard, FIG. 2 depicts an exemplary waypoint list GUI display 200 after the aircraft has traversed the KEENS waypoint.

As described above, logical dividers 208, 220, 230 are inserted between waypoints in the waypoint list region 202 to delineate or otherwise indicate different logical operational segments of the flight plan, with corresponding graphical indicia 210, 222, 232 emanating from the dividers 208, 220, 230 to identify the waypoints belonging to the respective logical grouping. In this regard, the dividers 208, 220, 230 function as headers for a logical grouping of waypoints, and accordingly, the dividers 208, 220, 230 may alternatively be referred to herein as headers. In exemplary embodiments of the invention, the flight plan segment headers 208, 220, 230 are visually distinguishable from entries corresponding to waypoints within the waypoint list region 202, for example, by using a different font type, a different font size, a different font color, and/or other visually distinguishable characteristics when rendering the headers 208, 220, 230. In the illustrated embodiment, the flight plan segment headers 208, 220, 230 utilize a smaller font size than the waypoint entries within the waypoint list region 202.

As illustrated in FIG. 2, the currently selected IZZO waypoint 206 is assigned to the flight plan segment group for the departure airway from runway 24L via the IZZO and BLH waypoints that is assigned with the identifier 24L.IZZO6.BLH denoted by divider 208, with a line that emanates downward from the 24L.IZZO6.BLH divider 208 and extends beyond and through the currently selected IZZO waypoint 206 to the BLH waypoint that marks the final waypoint of the logical grouping. In the illustrated embodiment, the currently selected waypoint entry 206 is presented overlying the waypoint group indicator 210. The groupings of waypoints may be determined or derived from published arrivals, departures, airways, and/or the like. The groupings also reflect how the flight plan is requested and cleared by air traffic control (ATC). For example, ATC may not specify every waypoint along an airway, but rather, provide the airway to follow and the waypoint(s) where to enter and/or exit the airway.

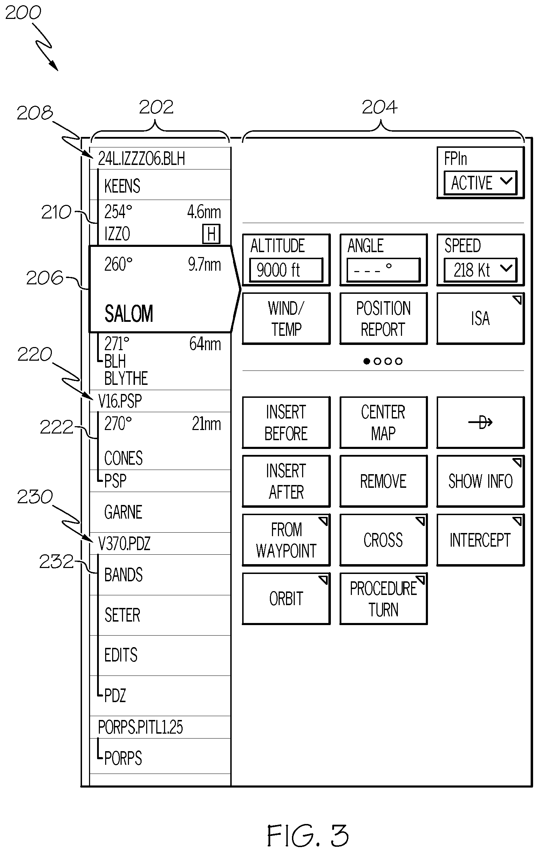

Referring now to FIGS. 3-9, a user may utilize a user interface 140 to scroll within the waypoint list region 202, which, in turn dynamically updates the currently selected waypoint depicted by the waypoint detail region 204 and waypoint entry 206 while maintaining the currently selected waypoint entry 206 anchored at a substantially fixed position on the display device 130. For example, as the user scrolls the list upward to advance to and select the SALOM waypoint, the currently selected waypoint entry 206 depicting information pertaining to the SALOM waypoint is maintained as the fourth entry within the waypoint list region 202. In this regard, the KDVT waypoint entry is advanced outside the display area, while the 24L.IZZO6.BLH header 208 progresses to the top of the waypoint list region 202.

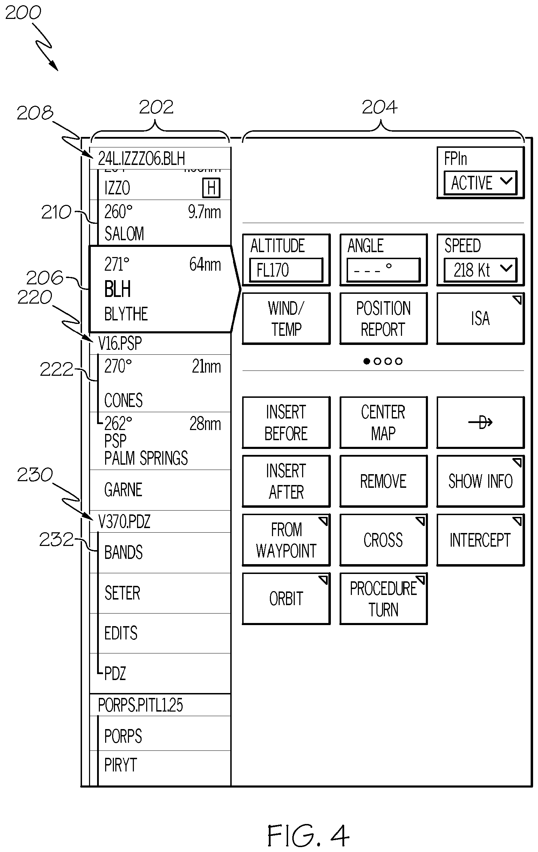

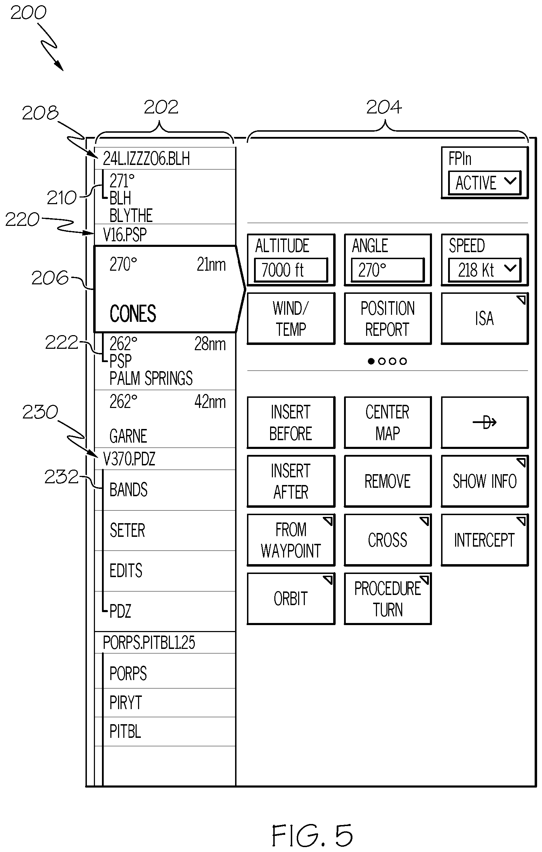

Referring now to FIGS. 4-5 with continued reference to FIGS. 2-3, in exemplary embodiments, the 24L.IZZO6.BLH header 208 is maintained at the top of the waypoint list region 202 as the user scrolls through the waypoints to maintain indication of what logical flight plan segment that the currently selected waypoint and/or the immediately preceding waypoint belongs to until neither the currently selected waypoint nor its immediately preceding waypoint belong to the 24L.IZZO6.BLH grouping. In this regard, as the user continues to scroll the waypoint list after selection of the BLH waypoint as depicted in FIG. 4, the V16.PSP header 220 advances to a position above the currently selected waypoint entry 206 once the currently selected waypoint entry 206 corresponds to the CONES waypoint assigned to the V16.PSP grouping, and a corresponding graphical indication 222 emanates from the V16.PSP header 220 and extends downward behind the currently selected waypoint entry 206 to encompass the waypoints belonging to the V16.PSP grouping, as depicted in FIG. 5. However, the 24L.IZZO6.BLH header 208 is maintained at the top of the waypoint list region 202 along with the remaining portion of the graphical indication 210 that emanates from the 24L.IZZO6.BLH header 208 to indicate the BLH waypoint preceding the selected CONES waypoint belongs to the 24L.IZZO6.BLH grouping.

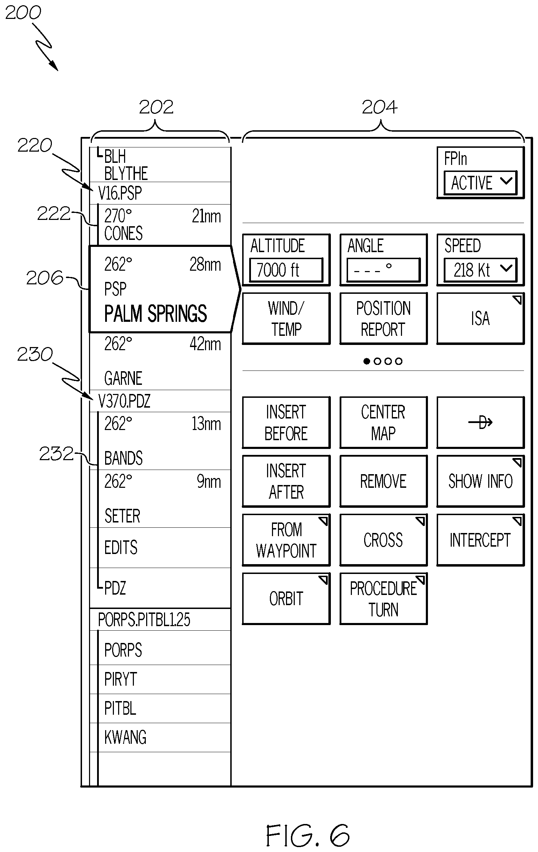

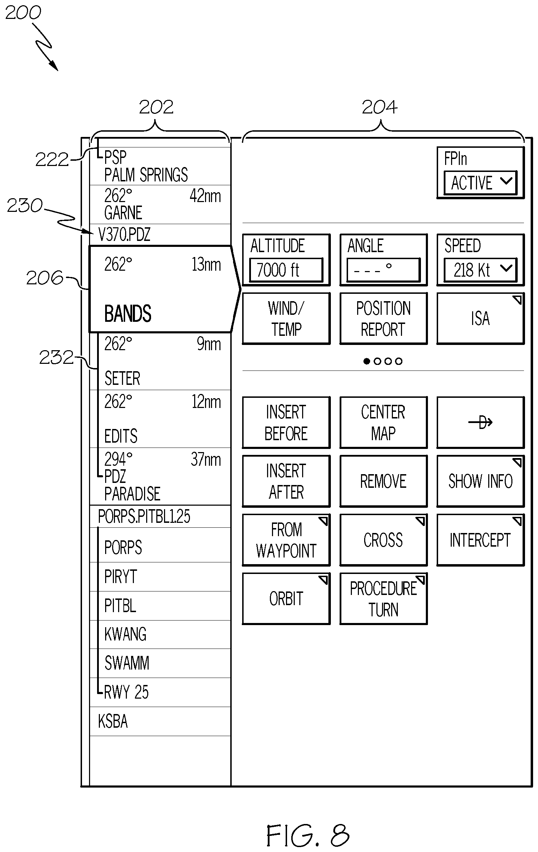

Referring now to FIGS. 6-7 with continued reference to FIGS. 2-5, as the user continues to scroll the waypoint list, the 24L.IZZO6.BLH header 208 is removed from the waypoint list region 202 once the waypoint preceding the currently selected waypoint does not belong to the 24L.IZZO6.BLH grouping. Thereafter, the V16.PSP header 220 is maintained at the top of the waypoint list region 202 as the user scrolls through the waypoints until neither the currently selected waypoint nor its immediately preceding waypoint belong to the V16.PSP grouping. Similarly, as depicted in FIGS. 8-9, as the user continues to scroll the waypoint list, the V16.PSP header 220 is removed from the waypoint list region 202 once the waypoint preceding the currently selected waypoint does not belong to the V16.PSP grouping. As illustrated in FIGS. 8-9, once a waypoint belonging to the V370.PDZ grouping is selected, the V370.PDZ header 230 advances to a position above the currently selected waypoint entry 206, with the corresponding graphical indication 232 emanating from the V370.PDZ header 230 and extending downward behind the currently selected waypoint entry 206 to encompass the waypoints belonging to the V370.PDZ grouping.

Still referring to FIGS. 2-9, in exemplary embodiments, the waypoint list region 202 scrolls upward automatically during flight as the aircraft traverses the real-world geographic position or area corresponding to the waypoint depicted within the currently selected waypoint entry 206. In this regard, FIG. 2 may depict the state of the waypoint list GUI display 200 the results from the waypoint list region 202 being automatically scrolled upward in response to the aircraft traversing the KEENS waypoint. Similarly, when the aircraft traverses the IZZO waypoint, the waypoint list GUI display 200 may automatically update from the selection of the IZZO waypoint depicted in FIG. 2 to the selection of the SALOM waypoint depicted in FIG. 3 (with the distance-to-go information appropriately corresponding to the aircraft position). That said, as described above, in exemplary embodiments, the waypoint list region 202 can also be manually scrolled by swiping or dragging the waypoint list region 202 with a finger (e.g., in the case of a touchscreen), touching, tapping, or otherwise selecting a waypoint further down the list (e.g., the waypoint list GUI display 200 may update from the selection of the IZZO waypoint depicted in FIG. 2 to the selection of the BLH waypoint depicted in FIG. 4 in response to a user tapping or selecting the BLH entry in FIG. 2), or by using a knob or other user interface device to incrementally scroll or advance through the waypoint list.

In exemplary embodiments, the emphasized entry 206 corresponding to the currently selected waypoint is maintained in a fixed position on the display device 130 with the waypoint list effectively scrolling behind the currently selected entry 206. In this regard, as the waypoint list scrolls under or behind the emphasized entry 206, a different waypoint is highlighted by the emphasized entry 206 with the waypoint detail region 204 updating accordingly. Waypoints associated with departures, arrivals, approaches, airways, or other logical flight plan segments are visually grouped together using a line that emanates from the header or divider that demarcates where that logical flight plan segment begins within the waypoint list. The header or divider with the name of the flight plan segment grouping sticks or is otherwise maintained at the top of the waypoint list as individual waypoints of the group scroll underneath until the header is no longer necessary or relevant to the currently selected waypoint or the immediately preceding waypoint.

By anchoring the currently selected waypoint to a fixed position on the display, the subject matter described herein solves the problem of a pilot having to locate the currently selected waypoint within the list. Additionally, by logically grouping waypoints within the list, it is easier for a pilot to identify where they are within the flight plan. For example, a pilot might not recognize individual waypoints by name, but may recognize the airway, procedure, or other higher level functional or operational significance that the waypoint is associated with. By maintaining presentation of the flight plan segment group name on the display along with a graphical indicator of the waypoints belonging to that grouping, a pilot may more easily relate the selected waypoint to its operational significance. Reducing the information presented for waypoints further down the waypoint list or waypoints that have already been traversed declutters the display, and thereby improves readability.

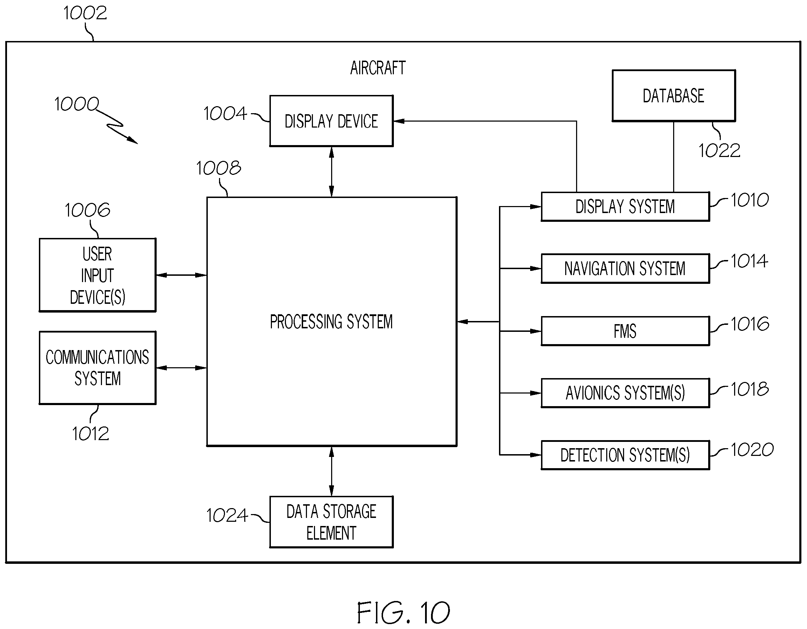

FIG. 10 depicts another embodiment of a system 1000 suitable for implementing the subject matter described herein onboard an aircraft 1002. The aircraft system 1000, includes, without limitation, a display device 1004, a user input device 1006, a processing system 1008, a display system 1010, a communications system 1012, a navigation system 1014, a flight management system (FMS) 1016, one or more avionics systems 1018, one or more detection systems 1020, and one or more data storage elements 1022, 1024 cooperatively configured to support operation of the system 1000, as described in greater detail below.

In exemplary embodiments, the display device 1004 is realized as an electronic display capable of graphically displaying flight information or other data associated with operation of the aircraft 1002 under control of the display system 1010 and/or processing system 1008. In this regard, the display device 1004 is coupled to the display system 1010 and the processing system 1008, wherein the processing system 1008 and the display system 1010 are cooperatively configured to display, render, or otherwise convey one or more graphical representations or images associated with operation of the aircraft 1002 on the display device 1004. For example, as described in greater detail below, a navigational map that includes a graphical representation of the aircraft 1002 and one or more of the terrain, meteorological conditions, airspace, air traffic, navigational reference points, and a route associated with a flight plan of the aircraft 1002 may be displayed, rendered, or otherwise presented on the display device 1004.

The user input device 1006 is coupled to the processing system 1008, and the user input device 1006 and the processing system 1008 are cooperatively configured to allow a user (e.g., a pilot, co-pilot, or crew member) to interact with the display device 1004 and/or other elements of the aircraft system 1000, as described in greater detail below. Depending on the embodiment, the user input device 1006 may be realized as a keypad, touchpad, keyboard, mouse, touch panel (or touchscreen), joystick, knob, line select key or another suitable device adapted to receive input from a user. In some embodiments, the user input device 1006 is realized as an audio input device, such as a microphone, audio transducer, audio sensor, or the like, that is adapted to allow a user to provide audio input to the aircraft system 1000 in a "hands free" manner without requiring the user to move his or her hands, eyes and/or head to interact with the aircraft system 1000.

The processing system 1008 generally represents the hardware, circuitry, processing logic, and/or other components configured to facilitate communications and/or interaction between the elements of the aircraft system 1000 and perform additional processes, tasks and/or functions to support operation of the aircraft system 1000, as described in greater detail below. Depending on the embodiment, the processing system 1008 may be implemented or realized with a general purpose processor, a controller, a microprocessor, a microcontroller, a content addressable memory, a digital signal processor, an application specific integrated circuit, a field programmable gate array, any suitable programmable logic device, discrete gate or transistor logic, processing core, discrete hardware components, or any combination thereof, designed to perform the functions described herein. In practice, the processing system 1008 includes processing logic that may be configured to carry out the functions, techniques, and processing tasks associated with the operation of the aircraft system 1000 described in greater detail below. Furthermore, the steps of a method or algorithm described in connection with the embodiments disclosed herein may be embodied directly in hardware, in firmware, in a software module executed by the processing system 1008, or in any practical combination thereof. In accordance with one or more embodiments, the processing system 1008 includes or otherwise accesses a data storage element 1024, such as a memory (e.g., RAM memory, ROM memory, flash memory, registers, a hard disk, or the like) or another suitable non-transitory short or long term storage media capable of storing computer-executable programming instructions or other data for execution that, when read and executed by the processing system 1008, cause the processing system 1008 to execute and perform one or more of the processes, tasks, operations, and/or functions described herein.

The display system 1010 generally represents the hardware, firmware, processing logic and/or other components configured to control the display and/or rendering of one or more displays pertaining to operation of the aircraft 1002 and/or systems 1012, 1014, 1016, 1018, 1020 on the display device 1004 (e.g., synthetic vision displays, navigational maps, and the like). In this regard, the display system 1010 may access or include one or more databases 1022 suitably configured to support operations of the display system 1010, such as, for example, a terrain database, an obstacle database, a navigational database, a geopolitical database, a terminal airspace database, a special use airspace database, or other information for rendering and/or displaying navigational maps and/or other content on the display device 1004. In this regard, in addition to including a graphical representation of terrain, a navigational map displayed on the display device 1004 may include graphical representations of navigational reference points (e.g., waypoints, navigational aids, distance measuring equipment (DMEs), very high frequency omnidirectional radio ranges (VORs), and the like), designated special use airspaces, obstacles, and the like overlying the terrain on the map.

As described in greater detail below, in an exemplary embodiment, the processing system 1008 includes or otherwise accesses a data storage element 1024 (or database), which maintains information regarding airports and/or other potential landing locations (or destinations) for the aircraft 1002. In this regard, the data storage element 1024 maintains an association between a respective airport, its geographic location, runways (and their respective orientations and/or directions), instrument procedures (e.g., approaches, arrival routes, and the like), airspace restrictions, and/or other information or attributes associated with the respective airport (e.g., widths and/or weight limits of taxi paths, the type of surface of the runways or taxi path, and the like). Additionally, in accordance with one or more embodiments, the data storage element 1024 also maintains status information for the runways and/or taxi paths at the airport indicating whether or not a particular runway and/or taxi path is currently operational along with directional information for the taxi paths (or portions thereof). The data storage element 1024 may also be utilized to store or maintain other information pertaining to the airline or aircraft operator (e.g., airline or operator preferences, etc.) along with information pertaining to the pilot and/or co-pilot of the aircraft (e.g., pilot preferences, experience level, licensure or other qualifications, etc.).

Still referring to FIG. 10, in an exemplary embodiment, the processing system 1008 is coupled to the navigation system 1014, which is configured to provide real-time navigational data and/or information regarding operation of the aircraft 1002. The navigation system 1014 may be realized as a global positioning system (GPS), inertial reference system (IRS), or a radio-based navigation system (e.g., VHF omni-directional radio range (VOR) or long range aid to navigation (LORAN)), and may include one or more navigational radios or other sensors suitably configured to support operation of the navigation system 1014, as will be appreciated in the art. The navigation system 1014 is capable of obtaining and/or determining the instantaneous position of the aircraft 1002, that is, the current (or instantaneous) location of the aircraft 1002 (e.g., the current latitude and longitude) and the current (or instantaneous) altitude (or above ground level) for the aircraft 1002. The navigation system 1014 is also capable of obtaining or otherwise determining the heading of the aircraft 1002 (i.e., the direction the aircraft is traveling in relative to some reference).

In an exemplary embodiment, the processing system 1008 is also coupled to the FMS 1016, which is coupled to the navigation system 1014, the communications system 1012, and one or more additional avionics systems 1018 to support navigation, flight planning, and other aircraft control functions in a conventional manner, as well as to provide real-time data and/or information regarding the operational status of the aircraft 1002 to the processing system 1008. It should be noted that although FIG. 10 depicts a single avionics system 1018, in practice, the aircraft system 1000 and/or aircraft 1002 will likely include numerous avionics systems for obtaining and/or providing real-time flight-related information that may be displayed on the display device 1004 or otherwise provided to a user (e.g., a pilot, a co-pilot, or crew member). For example, practical embodiments of the aircraft system 1000 and/or aircraft 1002 will likely include one or more of the following avionics systems suitably configured to support operation of the aircraft 1002: a weather system, an air traffic management system, a radar system, a traffic avoidance system, an autopilot system, an autothrust system, a flight control system, hydraulics systems, pneumatics systems, environmental systems, electrical systems, engine systems, trim systems, lighting systems, crew alerting systems, electronic checklist systems, an electronic flight bag and/or another suitable avionics system.

In the illustrated embodiment, the onboard detection system(s) 1020 generally represents the component(s) of the aircraft 1002 that are coupled to the processing system 1008 and/or the display system 1010 to generate or otherwise provide information indicative of various objects or regions of interest within the vicinity of the aircraft 1002 that are sensed, detected, or otherwise identified by a respective onboard detection system 1020. For example, an onboard detection system 1020 may be realized as a weather radar system or other weather sensing system that measures, senses, or otherwise detects meteorological conditions in the vicinity of the aircraft 1002 and provides corresponding radar data (e.g., radar imaging data, range setting data, angle setting data, and/or the like) to one or more of the other onboard systems 1008, 1010, 1014, 1016, 1018 for further processing and/or handling. For example, the processing system 1008 and/or the display system 1010 may generate or otherwise provide graphical representations of the meteorological conditions identified by the onboard detection system 1020 on the display device 1004 (e.g., on or overlying a lateral navigational map display). In another embodiment, an onboard detection system 1020 may be realized as a collision avoidance system that measures, senses, or otherwise detects air traffic, obstacles, terrain and/or the like in the vicinity of the aircraft 1002 and provides corresponding detection data to one or more of the other onboard systems 1008, 1010, 1014, 1016, 1018.

In the illustrated embodiment, the processing system 1008 is also coupled to the communications system 1012, which is configured to support communications to and/or from the aircraft 1002 via a communications network. For example, the communications system 1012 may also include a data link system or another suitable radio communication system that supports communications between the aircraft 1002 and one or more external monitoring systems, air traffic control, and/or another command center or ground location. In this regard, the communications system 1012 may allow the aircraft 1002 to receive information that would otherwise be unavailable to the pilot and/or co-pilot using the onboard systems 1014, 1016,1018,1020. For example, the communications system 1012 may receive meteorological information from an external weather monitoring system, such as a Doppler radar monitoring system, a convective forecast system (e.g., a collaborative convective forecast product (CCFP) or national convective weather forecast (NCWF) system), an infrared satellite system, or the like, that is capable of providing information pertaining to the type, location and/or severity of precipitation, icing, turbulence, convection, cloud cover, wind shear, wind speed, lightning, freezing levels, cyclonic activity, thunderstorms, or the like along with other weather advisories, warnings, and/or watches. The meteorological information provided by an external weather monitoring system may also include forecast meteorological data that is generated based on historical trends and/or other weather observations, and may include forecasted meteorological data for geographical areas that are beyond the range of any weather detection systems 1020 onboard the aircraft 1002. In other embodiments, the processing system 1008 may store or otherwise maintain historic meteorological data previously received from an external weather monitoring system, with the processing system 1008 calculating or otherwise determining forecast meteorological for geographic areas of interest to the aircraft 1002 based on the stored meteorological data and the current (or most recently received) meteorological data from the external weather monitoring system. In this regard, the meteorological information from the external weather monitoring system may be operationally used to obtain a "big picture" strategic view of the current weather phenomena and trends in its changes in intensity and/or movement with respect to prospective operation of the aircraft 1002.

It should be understood that FIG. 10 is a simplified representation of the aircraft system 1000 for purposes of explanation and ease of description, and FIG. 10 is not intended to limit the application or scope of the subject matter described herein in any way. It should be appreciated that although FIG. 10 shows the display device 1004, the user input device 1006, and the processing system 1008 as being located onboard the aircraft 1002 (e.g., in the cockpit), in practice, one or more of the display device 1004, the user input device 1006, and/or the processing system 1008 may be located outside the aircraft 1002 (e.g., on the ground as part of an air traffic control center or another command center) and communicatively coupled to the remaining elements of the aircraft system 1000 (e.g., via a data link and/or communications system 1012). In this regard, in some embodiments, the display device 1004, the user input device 1006, and/or the processing system 1008 may be implemented as an electronic flight bag that is separate from the aircraft 1002 but capable of being communicatively coupled to the other elements of the aircraft system 1000 when onboard the aircraft 1002. Similarly, in some embodiments, the data storage element 1024 may be located outside the aircraft 1002 and communicatively coupled to the processing system 1008 via a data link and/or communications system 1012. Furthermore, practical embodiments of the aircraft system 1000 and/or aircraft 1002 will include numerous other devices and components for providing additional functions and features, as will be appreciated in the art. In this regard, it will be appreciated that although FIG. 10 shows a single display device 1004, in practice, additional display devices may be present onboard the aircraft 1002. Additionally, it should be noted that in other embodiments, features and/or functionality of processing system 1008 described herein can be implemented by or otherwise integrated with the features and/or functionality provided by the display system 1010 or the FMS 1016, or vice versa. In other words, some embodiments may integrate the processing system 1008 with the display system 1010 or the FMS 1016; that is, the processing system 1008 may be a component of the display system 1010 and/or the FMS 1016.

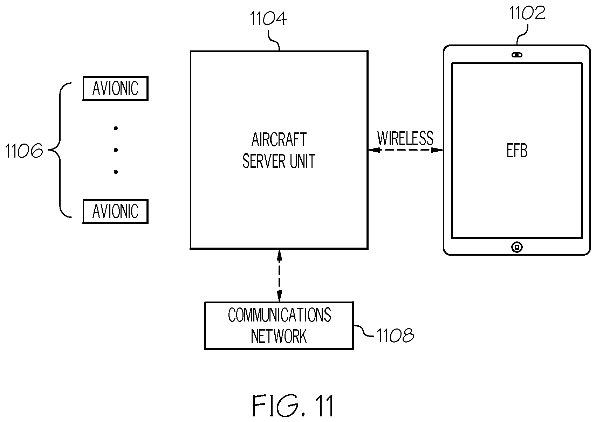

FIG. 11 depicts an exemplary embodiment of an electronic flight bag (EFB) system 1100 suitable for implementing the subject matter described herein. The EFB system includes an electronic device 1102 (alternatively referred to as the EFB) that is communicatively coupled to a host device 1104 that is communicatively coupled to one or more of the avionics systems 1106 onboard an aircraft (e.g., avionics systems 1012, 1014, 1016, 1018, 1020). The host device 1104 generally represents a computer system configured support the subject matter described herein and provide corresponding waypoint list GUI displays on the electronic device 1102, and for purposes of explanation, but without limitation, the host device 1104 is referred to herein as a server unit (or server). In this regard, the host server 1104 includes at least a processing system (e.g., processing system 1008) and/or other hardware computing resources along with one or more data storage elements (or memory) capable of storing instructions, that, when read and executed by the processing system, cause the host server 1104 to generate or otherwise support the scrollable waypoint list display processes described herein. The host server 1104 may also be coupled to a communications network 1108, which may be utilized to receive data and/or information (e.g., meteorological information, or the like) in conjunction with the scrollable waypoint list display processes and/or to support communications with the electronic device 1102.

In exemplary embodiments, the electronic device 1102 is realized as a laptop or notebook computer, a tablet computer, or another suitable computing device configured to provide EFB-functionality, and accordingly, the electronic device 1102 is alternatively referred to herein as an EFB. The EFB 1102 includes at least a display device (e.g., display device 1004) and a processing system (e.g., processing system 1008 and/or display system 1010), a data storage element (or memory) configured to support generating energy management GUI displays as described herein. In various situations, the EFB 1102 may be subject to regulations or restrictions that limit the use of the EFB 1102 or the type or content of information presented thereon (e.g., no tactical information may be presented, etc.). In one or more embodiments, a pilot of the aircraft utilizes the EFB 1102 to view and scroll through the waypoint list GUI displays as described above.

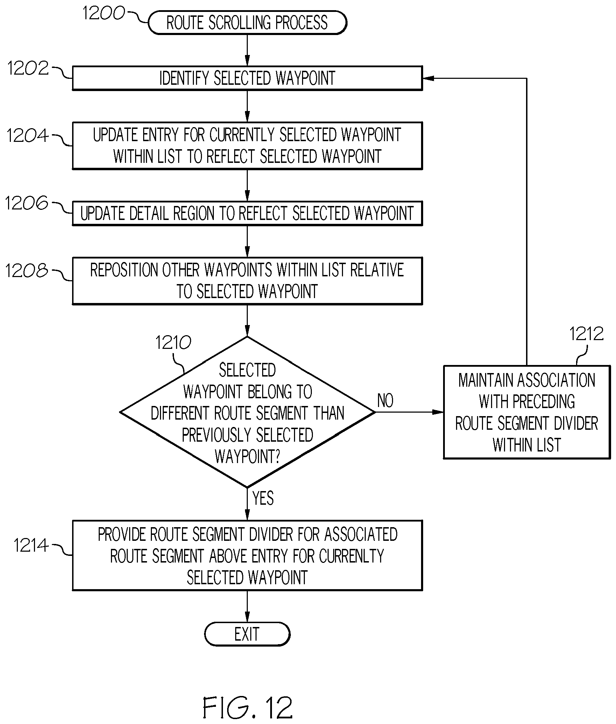

FIG. 12 depicts an exemplary embodiment of a route scrolling process 1200 suitable for implementation by an aircraft system 100 or EFB system 1100 in connection with providing the waypoint list GUI displays of FIGS. 2-9. The various tasks performed in connection with the illustrated process 1200 may be implemented using hardware, firmware, software executed by processing circuitry, or any combination thereof. In practice, portions of the route scrolling process 1200 may be performed by different elements of the aircraft system 100 and/or the EFB system 1100. It should be appreciated that the route scrolling process 1200 may include any number of additional or alternative tasks, the tasks need not be performed in the illustrated order and/or the tasks may be performed concurrently, and/or the route scrolling process 1200 may be incorporated into a more comprehensive procedure or process having additional functionality not described in detail herein. Moreover, one or more of the tasks shown and described in the context of FIG. 12 could be omitted from a practical embodiment of the route scrolling process 1200 as long as the intended overall functionality remains intact.

The route scrolling process 1200 is performed after initially displaying or otherwise providing a waypoint list GUI display including a scrollable waypoint list region including a list of the waypoints associated with a planned route of travel and a detail region adjacent to the scrollable waypoint list region to depict additional information associated with a currently selected waypoint in the waypoint list. In this regard, the scrollable waypoint list region includes an entry that indicates or is otherwise associated with the currently selected waypoint, and the entry graphically emphasized to distinguish the currently selected waypoint from other waypoints in the list. In exemplary embodiments, the waypoint list GUI display may be initialized by depicting the first or initial waypoint of a flight plan within the currently selected waypoint entry, with graphical indication of the departure airport and/or runway and the route segment associated with the initial waypoint (e.g., the name of an assigned departure procedure) provided above the currently selected waypoint entry. The currently selected waypoint entry is populated with the name or other identifier associated with the initial waypoint along with other information associated with the waypoint (e.g., the planned heading upon traversing the waypoint according to the assigned departure procedure and a distance to go from the current aircraft position), with the detail region including additional information associated with the waypoint as described above.

The route scrolling process 1200 identifies or detects a change to the currently selected waypoint and in response dynamically updates both the currently selected waypoint entry and the detail region to reflect the newly selected waypoint (tasks 1202, 1204, 1206). In this regard, the currently selected waypoint may be automatically adjusted or updated either in response to the aircraft traversing the previously-selected waypoint or a user manually scrolling the list of waypoints. The currently selected waypoint entry is repopulated or otherwise updated to depict the name or other identifier associated with the newly selected waypoint along with additional information associated with the newly selected waypoint (e.g., the planned heading and distance to go) in lieu of the previously-displayed information associated with the previously-selected waypoint, and the detail region is correspondingly repopulated or updated to include additional information associated with the newly selected waypoint in lieu of the previously-selected waypoint. The other waypoints in the waypoint list are then dynamically repositioned or adjusted with respect to the currently selected waypoint entry to maintain the ordered sequence of waypoints defined by the flight plan (task 1208). For example, in response to the aircraft traversing the initial waypoint, the name or other identifier of the initial waypoint may be removed from the currently selected waypoint entry and instead depicted at another location within the waypoint list above the currently selected waypoint entry, with the following waypoints successively advancing their location within the waypoint list upward in accordance with the adjustment to the currently selected waypoint. In this manner, the other waypoints in the waypoint list appear to effectively scroll behind or otherwise with respect to the currently selected waypoint entry.

In the illustrated embodiment, the route scrolling process 1200 identifies or otherwise determines whether the currently selected waypoint is associated with a different route segment than the previously-selected waypoint (task 1210). When the currently selected waypoint is associated with the same route segment, the route scrolling process 1200 maintains the association between the currently selected waypoint and that route segment (task 1212), for example, by extending or otherwise maintaining the waypoint group indicator 210 that extends from the route segment indicator 208 beyond at least the upper edge or boundary of the currently selected waypoint entry 206 as depicted in FIGS. 2-3. Conversely, when the currently selected waypoint is associated with a different route segment, the route scrolling process 1200 inserts or otherwise provides a graphical indication of that different route segment above the currently selected waypoint entry within the waypoint list (task 1214). For example, as depicted in FIGS. 4-5, the V16.PSP header 220 is provided above the currently selected waypoint entry 206 when the currently selected waypoint entry 206 is adjusted from the BLH waypoint to the CONES waypoint assigned to the V16.PSP grouping.

For the sake of brevity, conventional techniques related to aircraft procedures, flight planning, graphical user interfaces, graphics and image processing, avionics systems, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

The subject matter may be described herein in terms of functional and/or logical block components, and with reference to symbolic representations of operations, processing tasks, and functions that may be performed by various computing components or devices. It should be appreciated that the various block components shown in the figures may be realized by any number of hardware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices. Furthermore, embodiments of the subject matter described herein can be stored on, encoded on, or otherwise embodied by any suitable non-transitory computer-readable medium as computer-executable instructions or data stored thereon that, when executed (e.g., by a processing system), facilitate the processes described above.

The foregoing description refers to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the drawings may depict one exemplary arrangement of elements directly connected to one another, additional intervening elements, devices, features, or components may be present in an embodiment of the depicted subject matter. In addition, certain terminology may also be used herein for the purpose of reference only, and thus are not intended to be limiting.

The foregoing detailed description is merely exemplary in nature and is not intended to limit the subject matter of the application and uses thereof. Furthermore, there is no intention to be bound by any theory presented in the preceding background, brief summary, or the detailed description.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the subject matter in any way. Rather, the foregoing detailed description will provide those skilled in the art with a convenient road map for implementing an exemplary embodiment of the subject matter. It should be understood that various changes may be made in the function and arrangement of elements described in an exemplary embodiment without departing from the scope of the subject matter as set forth in the appended claims. Accordingly, details of the exemplary embodiments or other limitations described above should not be read into the claims absent a clear intention to the contrary.

## Claims

1. A method of presenting a route for an aircraft on a waypoint list graphical user interface display (200) onboard the aircraft, the method comprising:
providing, on a display device, the waypoint list graphical user interface display (200) comprising a waypoint list region (202) and a detail region (204) adjacent to the waypoint list region (202), wherein the detail region (204) comprises information associated with a currently selected waypoint (206) of the route identified within an entry in the waypoint list region (202);
wherein the route comprises a plurality of route segments each comprising a logical grouping of waypoints,
wherein the waypoint list region comprises route segment indicators functioning as headers for the respective logical grouping of waypoints,
each route segment indicator identifying waypoints belonging to the logical grouping of the respective route segment, and a waypoint group indicator extends from each route segment indicator to identify the waypoints belonging to the logical grouping; and
dynamically updating the detail region (204) to reflect a second waypoint of the route in response to adjusting the currently selected waypoint (206) within the route from a first waypoint of the route to the second waypoint of the route, wherein the entry in the waypoint list region (202) corresponding to the currently selected waypoint (206) is maintained in a fixed position on the display device while the currently selected waypoint (206) is adjusted from the first waypoint to the second waypoint.

2. The method of claim 1, wherein dynamically updating the detail region (204) comprises displaying second information associated with the second waypoint within the detail region (204) in lieu of the information associated with the first waypoint previously displayed within the detail region (204).

3. The method of claim 2, further comprising providing indicia of the second waypoint as the currently selected waypoint (206) at the fixed position in response to adjusting the currently selected waypoint (206).

4. The method of claim 3, further comprising providing second graphical indicia of the first waypoint at a position within the waypoint list region (202) different from the fixed position in response to adjusting the currently selected waypoint (206), wherein the second graphical indicia of the first waypoint is initially displayed at the fixed position prior to adjusting the currently selected waypoint (206).

5. The method of claim 1, wherein dynamically updating the detail region (204) comprises dynamically updating the detail region (204) in response to a user manually scrolling the waypoint list region (202).

6. The method of claim 1, wherein dynamically updating the detail region (204) comprises dynamically updating the detail region (204) in response to a user selecting the second waypoint within the waypoint list region (202).

7. The method of claim 1, wherein dynamically updating the detail region (204) comprises dynamically updating the detail region (204) in response to the vehicle traversing the first waypoint.

8. The method of claim 1, further comprising providing graphical indicia of the second waypoint as the currently selected waypoint (206) at the fixed position in response to adjusting the currently selected waypoint (206).

9. The method of claim 1, wherein providing the graphical user interface display (200) comprises providing first graphical indicia of the first waypoint at the fixed position within the waypoint list region (202) and providing second graphical indicia of the second waypoint at a second position within the waypoint list region (202), the second position being different from the fixed position.

10. The method of claim 9, further comprising dynamically updating the waypoint list region (202) to include the second graphical indicia of the second waypoint at the fixed position within the waypoint list region (202) and the first graphical indicia of the first waypoint at a third position within the waypoint list region (202) different from the fixed position in response to adjusting the currently selected waypoint (206) from the first waypoint to the second waypoint.

11. The method of claim 10, wherein dynamically updating the detail region (204) comprises displaying second information associated with the second waypoint within the detail region (204) in lieu of the information associated with the first waypoint previously displayed within the detail region (204).

12. The method of claim 1, wherein:
the waypoint list region (202) comprises a scrollable region comprising a list of waypoints of the route; and
in response to adjusting the currently selected waypoint (206) from the first waypoint to the second waypoint, the list of waypoints scrolls behind the entry for the currently selected waypoint (206).

13. The method of claim 1, further comprising dynamically updating the waypoint list region (202) to include a divider disposed above the entry for the currently selected waypoint (206) to reflect a route segment associated with the second waypoint in response to adjusting the currently selected waypoint (206) from the first waypoint to the second waypoint when the route segment is different from a second route segment associated with the first waypoint.

14. The method of claim 1, the waypoint list region (202) comprising a scrollable region comprising a list of waypoints of the route and the entry for the currently selected waypoint (206) including additional information relative to other displayed entries for the list of waypoints, the method further comprising dynamically updating the additional information within the entry for the currently selected waypoint (206) to reflect the second waypoint in response to adjusting the currently selected waypoint (206) from the first waypoint to the second waypoint.

15. An aircraft system comprising a display device and a processing system coupled to the display device to display a waypoint list graphical user interface (GUI) display on the display device, wherein the waypoint list GUI display (200) comprises:
a scrollable region (202) comprising a list of waypoints of a flight plan;
wherein the flight plan comprises a plurality of route segments each comprising a logical grouping of waypoints, wherein the scrollable region comprises route segment indicators functioning as headers for the respective logical grouping of waypoints, each route segment indicator identifying waypoints belonging to the logical grouping of the respective route segment, and a waypoint group indicator extends from each route segment indicator to identify the waypoints belonging to the logical grouping; and
a detail region (204) including additional information pertaining to a currently selected waypoint (206) within the list of waypoints, wherein in response to adjusting the currently selected waypoint (206) from a first waypoint to a second waypoint:
an entry in the scrollable region corresponding to the currently selected waypoint (206) is maintained in a fixed position on the display device;
the list of waypoints scrolls behind the entry for the currently selected waypoint (206); and
the additional information in the detail region is dynamically updated to reflect the second waypoint in lieu of the first waypoint.

## Patentansprüche

1. Verfahren zum Darstellen einer Route für ein Flugzeug auf einer grafischen Benutzerschnittstellenanzeige einer Wegpunktliste (200) an Bord des Flugzeugs, wobei das Verfahren umfasst:
Bereitstellen der grafischen Benutzerschnittstellenanzeige der Wegpunktliste (200) auf einer Anzeigevorrichtung, die einen Wegpunktlistenbereich (202) und einen Detailbereich (204) angrenzend an den Wegpunktlistenbereich (202) umfasst, wobei der Detailbereich (204) Informationen umfasst, die einem aktuell ausgewählten Wegpunkt (206) der Route zugeordnet sind, der innerhalb eines Eintrags in dem Wegpunktlistenbereich (202) identifiziert wurde;
wobei die Route eine Vielzahl von Routensegmenten umfasst, die jeweils eine logische Gruppierung von Wegpunkten umfassen,
wobei der Wegpunktlistenbereich Routensegmentindikatoren umfasst, die als Überschriften für die jeweilige logische Gruppierung von Wegpunkten fungieren,
jeder Routensegmentindikator Wegpunkte identifiziert, die zu der logischen Gruppierung des jeweiligen Routensegments gehören, und ein Wegpunktgruppenindikator sich von jedem Routensegmentindikator erstreckt, um die zu der logischen Gruppierung gehörenden Wegpunkte zu identifizieren; und
dynamisches Aktualisieren des Detailbereichs (204), um einen zweiten Wegpunkt der Route als Reaktion auf das Einstellen des aktuell ausgewählten Wegpunkts (206) innerhalb der Route von einem ersten Wegpunkt der Route zu dem zweiten Wegpunkt der Route wiederzugeben, wobei der Eintrag in dem Wegpunktlistenbereich (202), der dem aktuell ausgewählten Wegpunkt (206) entspricht, in einer festen Position auf der Anzeigevorrichtung beibehalten wird, während der aktuell ausgewählte Wegpunkt (206) von dem ersten Wegpunkt zu dem zweiten Wegpunkt eingestellt wird.

2. Verfahren nach Anspruch 1, wobei das dynamische Aktualisieren des Detailbereichs (204) das Anzeigen von zweiten Informationen, die mit dem zweiten Wegpunkt verbunden sind, innerhalb des Detailbereichs (204) anstelle der Informationen, die mit dem ersten Wegpunkt verbunden sind, der zuvor innerhalb des Detailbereichs (204) angezeigt wurde, umfasst.

3. Verfahren nach Anspruch 2, ferner umfassend das Bereitstellen von Zeichen auf den zweiten Wegpunkt als den aktuell ausgewählten Wegpunkt (206) an der festen Position als Reaktion auf das Einstellen des aktuell ausgewählten Wegpunkts (206).

4. Verfahren nach Anspruch 3, ferner umfassend das Bereitstellen von zweiten grafischen Zeichen des ersten Wegpunkts an einer Position innerhalb des Wegpunktlistenbereichs (202), die sich von der festen Position unterscheidet, als Reaktion auf das Einstellen des aktuell ausgewählten Wegpunkts (206), wobei die zweiten grafischen Zeichen des ersten Wegpunkts anfänglich an der festen Position angezeigt werden, bevor der aktuell ausgewählte Wegpunkt (206) eingestellt wird.

5. Verfahren nach Anspruch 1, wobei das dynamische Aktualisieren des Detailbereichs (204) das dynamische Aktualisieren des Detailbereichs (204) als Reaktion auf ein manuelles Scrollen des Wegpunktlistenbereichs (202) durch einen Benutzer umfasst.

6. Verfahren nach Anspruch 1, wobei das dynamische Aktualisieren des Detailbereichs (204) das dynamische Aktualisieren des Detailbereichs (204) als Reaktion auf die Auswahl des zweiten Wegpunkts innerhalb des Wegpunktlistenbereichs (202) durch einen Benutzer umfasst.

7. Verfahren nach Anspruch 1, wobei das dynamische Aktualisieren des Detailbereichs (204) ein dynamisches Aktualisieren des Detailbereichs (204) als Reaktion darauf umfasst, dass das Fahrzeug den ersten Wegpunkt durchfährt.

8. Verfahren nach Anspruch 1, ferner umfassend das Bereitstellen von graphischen Zeichen auf den zweiten Wegpunkt als den aktuell ausgewählten Wegpunkt (206) an der festen Position als Reaktion auf das Einstellen des aktuell ausgewählten Wegpunkts (206).

9. Verfahren nach Anspruch 1, wobei das Bereitstellen der grafischen Benutzerschnittstellenanzeige (200) das Bereitstellen von ersten grafischen Zeichen des ersten Wegpunkts an der festen Position innerhalb des Wegpunktlistenbereichs (202) und das Bereitstellen von zweiten grafischen Zeichen des zweiten Wegpunkts an einer zweiten Position innerhalb des Wegpunktlistenbereichs (202) umfasst, wobei sich die zweite Position von der festen Position unterscheidet.

10. Verfahren nach Anspruch 9, ferner umfassend das dynamische Aktualisieren des Wegpunktlistenbereichs (202), um die zweiten grafischen Zeichen des zweiten Wegpunkts an der festen Position innerhalb des Wegpunktlistenbereichs (202) und die ersten grafischen Zeichen des ersten Wegpunkts an einer dritten Position innerhalb des Wegpunktlistenbereichs (202), die sich von der festen Position unterscheidet, als Reaktion auf das Einstellen des aktuell ausgewählten Wegpunkts (206) von dem ersten Wegpunkt auf den zweiten Wegpunkt aufzunehmen.

11. Verfahren nach Anspruch 10, wobei das dynamische Aktualisieren des Detailbereichs (204) das Anzeigen von zweiten Informationen, die mit dem zweiten Wegpunkt verbunden sind, innerhalb des Detailbereichs (204) anstelle der Informationen, die mit dem ersten Wegpunkt verbunden sind, der zuvor innerhalb des Detailbereichs (204) angezeigt wurde, umfasst.

12. Verfahren nach Anspruch 1, wobei:
der Wegpunktlistenbereich (202) einen scrollbaren Bereich umfasst, der eine Liste von Wegpunkten der Route umfasst; und
die Liste der Wegpunkte als Reaktion auf das Einstellen des aktuell ausgewählten Wegpunkts (206) vom ersten Wegpunkt zum zweiten Wegpunkt hinter den Eintrag für den aktuell ausgewählten Wegpunkt (206) scrollt.

13. Verfahren nach Anspruch 1, ferner umfassend das dynamische Aktualisieren des Wegpunktlistenbereichs (202), um einen Teiler einzuschließen, der oberhalb des Eintrags für den aktuell ausgewählten Wegpunkt (206) angeordnet ist, um ein Routensegment wiederzugeben, das dem zweiten Wegpunkt zugeordnet ist, als Reaktion auf das Einstellen des aktuell ausgewählten Wegpunkts (206) von dem ersten Wegpunkt zu dem zweiten Wegpunkt, wenn sich das Routensegment von einem zweiten Routensegment unterscheidet, das dem ersten Wegpunkt zugeordnet ist.

14. Verfahren nach Anspruch 1, wobei der Wegpunktlistenbereich (202) einen scrollbaren Bereich umfasst, der eine Liste von Wegpunkten der Route umfasst, und der Eintrag für den aktuell ausgewählten Wegpunkt (206) zusätzliche Informationen bezogen auf andere angezeigte Einträge für die Liste von Wegpunkten einschließt, wobei das Verfahren ferner umfasst, dass die zusätzlichen Informationen innerhalb des Eintrags für den aktuell ausgewählten Wegpunkt (206) dynamisch aktualisiert werden, um den zweiten Wegpunkt als Reaktion auf das Einstellen des aktuell ausgewählten Wegpunkts (206) von dem ersten Wegpunkt auf den zweiten Wegpunkt wiederzugeben.

15. Flugzeugsystem umfassend eine Anzeigevorrichtung und ein Verarbeitungssystem, das mit der Anzeigevorrichtung gekoppelt ist, um eine grafische Benutzerschnittstellenanzeige (GUI) für eine Wegpunktliste auf der Anzeigevorrichtung anzuzeigen, wobei die GUI-Anzeige (200) der Wegpunktliste umfasst:
einen scrollbaren Bereich (202), der eine Liste von Wegpunkten eines Flugplans umfasst;
wobei der Flugplan eine Vielzahl von Routensegmenten umfasst, die jeweils eine logische Gruppierung von Wegpunkten umfassen, wobei der scrollbare Bereich Routensegmentindikatoren umfasst, die als Überschriften für die jeweilige logische Gruppierung von Wegpunkten fungieren, wobei jeder Routensegmentindikator Wegpunkte identifiziert, die zu der logischen Gruppierung des jeweiligen Routensegments gehören, und ein Wegpunktgruppenindikator sich von jedem Routensegmentindikator erstreckt, um die zu der logischen Gruppierung gehörenden Wegpunkte zu identifizieren; und
einen Detailbereich (204), der zusätzliche Informationen einschließt, die sich auf einen aktuell ausgewählten Wegpunkt (206) innerhalb der Liste der Wegpunkte beziehen, wobei als Reaktion auf das Einstellen des aktuell ausgewählten Wegpunkts (206) von einem ersten Wegpunkt zu einem zweiten Wegpunkt:
ein Eintrag in dem scrollbaren Bereich, der dem aktuell ausgewählten Wegpunkt (206) entspricht, an einer festen Position auf der Anzeigevorrichtung gehalten wird;
die Wegpunktliste hinter den Eintrag für den aktuell ausgewählten Wegpunkt (206) scrollt; und
die zusätzlichen Informationen im Detailbereich dynamisch aktualisiert werden, um den zweiten Wegpunkt anstelle des ersten Wegpunkts wiederzugeben.

## Revendications

1. Procédé de présentation d'un itinéraire pour un aéronef sur un affichage d'interface utilisateur graphique de liste de points de cheminement (200) à bord de l'aéronef, le procédé comprenant :
la fourniture, sur un dispositif d'affichage, de l'affichage d'interface utilisateur graphique de liste de points de cheminement (200) comprenant une région de liste de points de cheminement (202) et une région de détail (204) adjacente à la région de liste de points de cheminement (202), dans lequel la région de détail (204) comprend des informations associées à un point de cheminement actuellement sélectionné (206) de l'itinéraire identifié dans une entrée dans la région de liste de points de cheminement (202) ;
dans lequel l'itinéraire comprend une pluralité de segments d'itinéraire comprenant chacun un groupement logique de points de cheminement,
dans lequel la région de liste de points de cheminement comprend des indicateurs de segment d'itinéraire fonctionnant comme en-têtes pour le groupement logique respectif de points de cheminement,
chaque indicateur de segment d'itinéraire identifiant des points de cheminement appartenant au groupement logique du segment d'itinéraire respectif et un indicateur de groupe de points de cheminement s'étend à partir de chaque indicateur de segment d'itinéraire pour identifier les points de cheminement appartenant au groupement logique ; et
la mise à jour dynamique de la région de détail (204) pour refléter un second point de cheminement de l'itinéraire en réponse à l'ajustement du point de cheminement actuellement sélectionné (206) dans l'itinéraire, d'un premier point de cheminement de l'itinéraire au second point de cheminement de l'itinéraire, dans lequel l'entrée dans la région de liste de points de cheminement (202) correspondant au point de cheminement actuellement sélectionné (206) est maintenue dans une position fixe sur le dispositif d'affichage tandis que le point de cheminement actuellement sélectionné (206) est ajusté, du premier point de cheminement au second point de cheminement.

2. Procédé selon la revendication 1, dans lequel la mise à jour dynamique de la région de détail (204) comprend l'affichage de secondes informations associées au second point de cheminement dans la région de détail (204) au lieu des informations associées au premier point de cheminement précédemment affichées dans la région de détail (204).

3. Procédé selon la revendication 2, comprenant en outre la fourniture d'indices du second point de cheminement en tant que point de cheminement actuellement sélectionné (206) au niveau de la position fixe en réponse à l'ajustement du point de cheminement actuellement sélectionné (206).

4. Procédé selon la revendication 3, comprenant en outre la fourniture d'un second indice graphique du premier point de cheminement au niveau d'une position dans la région de liste de points de cheminement (202) différente de la position fixe en réponse à l'ajustement du point de cheminement actuellement sélectionné (206), dans lequel le second indice graphique du premier point de cheminement est initialement affiché au niveau de la position fixe avant d'ajuster le point de cheminement actuellement sélectionné (206).

5. Procédé selon la revendication 1, dans lequel la mise à jour dynamique de la région de détail (204) comprend la mise à jour dynamique de la région de détail (204) en réponse au défilement manuel, par un utilisateur, de la région de liste de points de cheminement (202).

6. Procédé selon la revendication 1, dans lequel la mise à jour dynamique de la région de détail (204) comprend la mise à jour dynamique de la région de détail (204) en réponse à la sélection, par un utilisateur, du second point de cheminement dans la région de liste de points de cheminement (202).

7. Procédé selon la revendication 1, dans lequel la mise à jour dynamique de la région de détail (204) comprend la mise à jour dynamique de la région de détail (204) en réponse au passage du véhicule sur le premier point de cheminement.

8. Procédé selon la revendication 1, comprenant en outre la fourniture d'un indice graphique du second point de cheminement en tant que point de cheminement actuellement sélectionné (206) au niveau de la position fixe en réponse à l'ajustement du point de cheminement actuellement sélectionné (206).

9. Procédé selon la revendication 1, dans lequel la fourniture de l'affichage d'interface utilisateur graphique (200) comprend la fourniture d'un premier indice graphique du premier point de cheminement au niveau de la position fixe dans la région de liste de points de cheminement (202) et la fourniture d'un second indice graphique du second point de cheminement au niveau d'une deuxième position dans la région de liste de points de cheminement (202), la deuxième position étant différente de la position fixe.

10. Procédé selon la revendication 9, comprenant en outre la mise à jour dynamique de la région de liste de points de cheminement (202) pour inclure le second indice graphique du second point de cheminement au niveau de la position fixe dans la région de liste de points de cheminement (202) et le premier indice graphique du premier point de cheminement au niveau d'une troisième position dans la région de liste de points de cheminement (202) différente de la position fixe en réponse à l'ajustement du point de cheminement actuellement sélectionné (206), du premier point de cheminement au second point de cheminement.

11. Procédé selon la revendication 10, dans lequel la mise à jour dynamique de la région de détail (204) comprend l'affichage de secondes informations associées au second point de cheminement dans la région de détail (204) au lieu des informations associées au premier point de cheminement précédemment affichées dans la région de détail (204).

12. Procédé selon la revendication 1, dans lequel :
la région de liste de points de cheminement (202) comprend une zone déroulante comprenant une liste de points de cheminement de l'itinéraire ; et
en réponse à l'ajustement du point de cheminement actuellement sélectionné (206), du premier point de cheminement au second point de cheminement, la liste des points de cheminement défile derrière l'entrée pour le point de cheminement actuellement sélectionné (206).

13. Procédé selon la revendication 1, comprenant en outre la mise à jour dynamique de la région de liste de points de cheminement (202) pour inclure un diviseur disposé au-dessus de l'entrée pour le point de cheminement actuellement sélectionné (206) pour refléter un segment d'itinéraire associé au second point de cheminement en réponse à l'ajustement du point de cheminement actuellement sélectionné (206), du premier point de cheminement au second point de cheminement, lorsque le segment d'itinéraire est différent d'un second segment d'itinéraire associé au premier point de cheminement.

14. Procédé selon la revendication 1, la région de liste de points de cheminement (202) comprenant une zone déroulante comprenant une liste de points de cheminement de l'itinéraire et l'entrée pour le point de cheminement actuellement sélectionné (206) comprenant des informations supplémentaires relatives à d'autres entrées affichées pour la liste de points de cheminement, le procédé comprenant en outre la mise à jour dynamique des informations supplémentaires dans l'entrée pour le point de cheminement actuellement sélectionné (206) pour refléter le second point de cheminement en réponse à l'ajustement du point de cheminement actuellement sélectionné (206), du premier point de cheminement au second point de cheminement.

15. Système d'aéronef comprenant un dispositif d'affichage et un système de traitement couplé au dispositif d'affichage pour afficher un affichage d'interface utilisateur graphique (GUI) de liste de points de cheminement sur le dispositif d'affichage, dans lequel l'affichage de GUI de liste de points de cheminement (200) comprend :
une zone défilante (202) comprenant une liste de points de cheminement d'un plan de vol ;
dans lequel le plan de vol comprend une pluralité de segments d'itinéraire comprenant chacun un groupement logique de points de cheminement, dans lequel la zone défilante comprend des indicateurs de segment d'itinéraire fonctionnant comme des en-têtes pour le groupement logique respectif de points de cheminement, chaque indicateur de segment d'itinéraire identifiant des points de cheminement appartenant au groupement logique du segment d'itinéraire respectif, et un indicateur de groupe de points de cheminement s'étend à partir de chaque indicateur de segment d'itinéraire pour identifier les points de cheminement appartenant au groupement logique ; et
une région de détail (204) comprenant des informations supplémentaires concernant un point de cheminement actuellement sélectionné (206) dans la liste de points de cheminement, dans lequel, en réponse à l'ajustement du point de cheminement actuellement sélectionné (206), d'un premier point de cheminement à un second point de cheminement :
une entrée dans la zone défilante correspondant au point de cheminement actuellement sélectionné (206) est maintenue dans une position fixe sur le dispositif d'affichage ;
la liste de points de cheminement défile derrière l'entrée pour le point de cheminement actuellement sélectionné (206) ; et
les informations supplémentaires dans la région de détail sont mises à jour dynamiquement pour refléter le second point de cheminement au lieu du premier point de cheminement.
